# FASCICULE DE BREVET EUROPEEN

(11) **EP 2 134 162 B1**
(45) Date de publication et mention de la délivrance du brevet: **22.09.2010**
(21) Numéro de dépôt: 08707585.9
(22) Date de dépôt: 07.02.2008
(51) Int. Cl.: A01K 11/00, A44B 11/20, G09F 3/00

(54) **LIEN POUR BAGUE D'IDENTIFICATION**
FESSEL FÜR EINEN IDENTIFIKATIONSRING
TIE FOR IDENTIFICATION RING

(30) Priorité: 07.03.2007 FR 0701658
(43) Date de publication de la demande: 23.12.2009
(73) Titulaire: A. Raymond et Cie., 38000 Grenoble (FR)
(72) Inventeur: GELIBERT, Stéphane, 38360 Sassenage (FR); LEGAT, Jean-Jacques, 38690 Colombe (FR)
(74) Mandataire: Rüttgers, Joachim
(86) Numéro de dépôt international: PCT/EP2008/000923
(87) Numéro de publication internationale: WO 2008/107054

(56) Documents cités:
- EP-A- 1 611 784
- EP-A2- 1 495 673
- US-A- 4 499 680

## Description

L'invention concerne un lien comprenant une bande ayant deux parties d'extrémité munies respectivement d'une partie femelle et d'une partie mâle d'un système de fixation.

La partie mâle s'insère dans la partie femelle du système de fixation quand les deux parties d'extrémité de la bande sont rapprochées l'une sur l'autre pour former une bague.

Un tel lien peut servir par exemple de bague d'identification destinée à être posée sur un membre inférieur (patte avant ou arrière, bras etc...) d'un animal. La réglementation peut imposer en effet que les animaux de type ovin, caprin et autres soient bagués dès leur naissance par exemple dans un but de traçabilité de la viande et ce de façon quasiment définitive sans qu'il soit possible de dissimuler la dépose et la repose d'une bague sur un animal.

Si une bague est posée sur un membre d'un animal, elle doit s'adapter à la morphologie de l'animal pendant toute la durée de la vie de l'animal. Par ailleurs, cette bague doit avoir une dimension telle que l'animal ne puisse pas l'enlever sans que cette bague enserre de manière trop proche le membre de l'animal. Comme ce type de bague est posé dès la naissance de l'animal, sa dimension doit varier pour suivre la croissance de l'animal.

On connaît du document de brevet EP-1611784 une bague d'identification pour animaux analogue à celle exposée plus haut et qui est en outre conçue pour être indémontable une fois posée sur l'animal. Toutefois, cette bague ne permet pas un réglage de sa dimension sans que la bague soit déposée de l'animal.

On connaît aussi du document de brevet EP-485039, une bague d'identification pour animaux analogue à celle exposée plus haut dont la bande a au moins une partie de sa circonférence qui est ondulée ce qui la rend extensible. Toutefois, cette bague ne présente pas de caractéristiques permettant d'empêcher une dépose/repose comme indiqué ci-dessus.

Le but de l'invention est de proposer une bague réalisée à partir d'un lien qui remédie aux inconvénients indiqués ci-dessus.

En particulier, un but de l'invention est de proposer une bague d'identification pouvant être posée sur un membre inférieur d'un animal et en particulier sur le paturon d'un ovin ou d'un caprin dès la naissance de l'animal.

A cet effet, l'invention a pour objet un lien comprenant une bande ayant deux parties d'extrémité munies respectivement d'une partie femelle et d'une partie mâle d'un système de fixation, caractérisé en ce que la partie femelle du système de fixation est une ouverture dans la bande qui est bordée par une zone sécable de la bande.

Cette construction de la bande contribue à ce que, lorsque le lien est positionné pour former une bague autour d'un membre d'un animal, il est possible d'agrandir le diamètre de la bague, sans retirer le lien autour du membre de l'animal, en détachant la zone sécable de la bande de sorte à allonger l'ouverture selon la direction longitudinale de la bande.

L'invention peut présenter les particularités suivantes :
- la zone sécable est constituée de plusieurs modules ou portions de bande sécables détachables individuellement de la bande ;
- chaque module ou portion de bande sécable est conçu pour être détaché de la bande par pelage ;
- chaque module ou portion de bande sécable comprend un bossage destiné à servir de point de préhension pour une pince afin de réaliser le pelage ;
- chaque module ou portion de bande sécable est adjacent à une fente dans la bande qui présente une échancrure servant d'amorce pour le pelage ;
- lesdits modules ou portions de bande sécables ont des dimensions différentes selon une direction longitudinale de la bande ;
- l'ouverture et chaque module ou portion de bande sécable ont une forme rectangulaire ;
- la partie mâle du système de fixation est une protubérance en forme d'ancre ;
- la partie d'extrémité de la bande munie de la partie femelle du système de fixation comporte deux bossages s'étendant parallèlement à une direction longitudinale de la bande de part et d'autre de l'ouverture, ces bossage servant à fermer l'espace résiduel entre la protubérance en forme d'ancre et l'ouverture quand celles-ci sont insérées l'une dans l'autre ;
- la partie d'extrémité de la bande munie de la partie mâle du système de fixation comporte deux rainures s'étendant parallèlement à une direction longitudinale de la bande et dans lesquelles coulisse l'autre partie d'extrémité de la bande munie de la partie femelle du système de fixation ;
- chaque rainure est constituée d'une pluralité de plots alignés selon ladite direction longitudinale et ayant une section en L ;
- la bande avec le système de fixation est formée d'une seule pièce en une matière plastique ou en métal ;

L'invention s'étend également a une bague destinée à être posée sur un membre inférieur d'un animal, caractérisée en ce qu'elle est réalisée à partir d'un lien tel que défini ci-dessus. Dans cette bague, le lien peut incorporer un dispositif d'identification, par exemple une étiquette RFID. Le dispositif d'identification peut être disposé dans une partie centrale de la bande située entre les deux parties d'extrémité de la bande, cette partie centrale de la bande pouvant être en surélévation par rapport à la partie d'extrémité de la bande munie de la partie mâle du système de fixation.

La construction du lien selon l'invention présente l'avantage d'une mise en place sous forme d'une bague sur un animal qui est simple et relativement intuitive, le verrouillage de la partie mâle dans la partie femelle du système de fixation étant simple à réaliser. Par ailleurs, ce verrouillage quasiment irréversible est protégé par les bossages de façon simple contre la fraude éventuelle et ce lien en une seule pièce est peu coûteux à réaliser notamment par moulage par injection d'une matière plastique.

L'invention sera encore mieux comprise à la lecture de la description qui suit et qui est illustrée par les dessins.
La figure 1 est une vue en perspective de dessus d'un exemple de réalisation schématique d'un lien selon l'invention.
La figure 2 est une vue en perspective de dessus partielle des deux extrémités du lien de la figure 1 lorsque celles-ci sont rapprochées l'une sur l'autre pour former une bague.

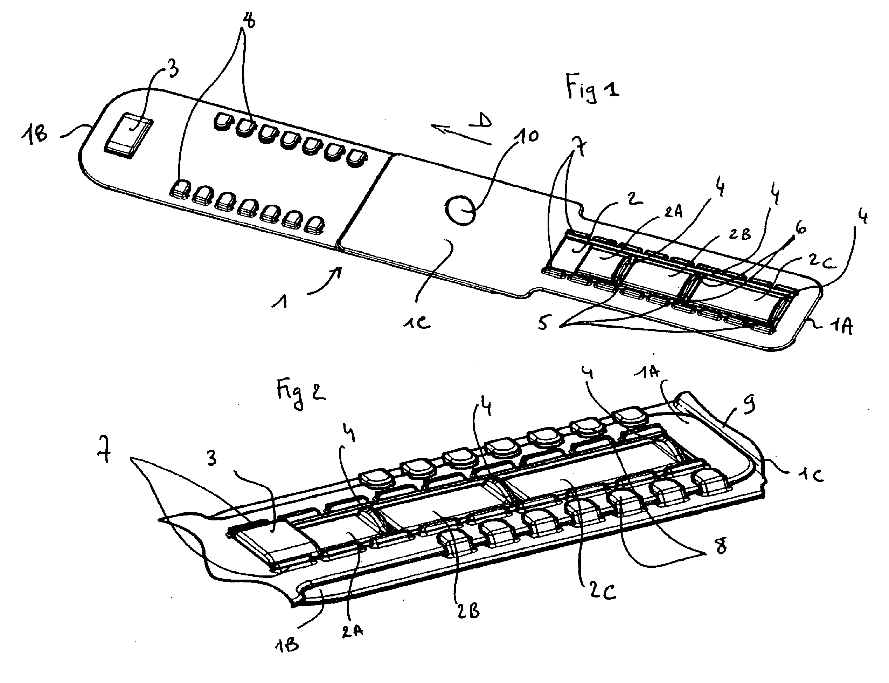

Sur la figure 1, le lien selon l'invention comprend une bande 1 qui s'étend selon une certaine direction longitudinale D entre une première partie d'extrémité 1A qui est munie d'une partie femelle d'un système de fixation et une seconde partie d'extrémité 1B qui est munie d'une partie mâle du système de fixation, cette partie mâle étant agencée pour s'insérer dans la partie femelle quand les deux parties d'extrémité 1A,1B sont rapprochées l'une sur l'autre, c'est à dire superposées, pour former une bague.

La partie femelle du système de fixation est ici une ouverture 2 dans la bande 1 qui a une forme rectangulaire et qui est disposée dans l'axe longitudinal de la bande à une certaine distance du bord d'extrémité de la partie d'extrémité 1A. La partie mâle du système de fixation est une protubérance 3 en forme d'ancre champignon pour assurer une fixation positive après insertion dans l'ouverture 2. La protubérance 3 est disposée proche du bord d'extrémité de la partie d'extrémité 1B.

Comme visible sur la figure 1, la protubérance 3 en forme d'ancre champignon a une tête de forme rectangulaire ajustée pour s'insérer avec un certain serrage dans la forme rectangulaire de l'ouverture 2 et un tronc (non visible sur les figures) dont la section transversale peut également être rectangulaire et être ajustée à la taille de l'ouverture 2 en vue d'obtenir un coulissement sans trop de jeu transversal à la direction D quand cette ouverture est allongée de façon modulaire selon la direction D comme décrit ci-après.

Selon l'invention, l'ouverture 2 dans la bande 1 est bordée par une zone sécable de la bande sous la forme de plusieurs modules ou portions de bande sécables 2A,2B,2C qui ici ont chacun une forme rectangulaire et qui se succèdent selon la direction D depuis l'ouverture 2 jusqu'au bord d'extrémité de la partie d'extrémité 1A de la bande. Le bord commun entre l'ouverture 2 et la zone sécable s'étend dans la bande 1 de façon sensiblement transversale à la direction D.

Par portion de bande sécable on désigne une portion de la bande qui est détachable facilement de la bande. Dans le cas présent, le détachement d'une portion sécable de la bande est réalisé par pelage (du fait que la bande est réalisée en une matière plutôt souple) mais on pourrait sans sortir du cadre de l'invention prévoir une portion sécable par brisure si la bande était réalisée en une matière plutôt rigide et cassante.

Les modules ou portions de bande 2A à 2B sont conçus pour être détachables individuellement de la bande par pelage et présentent chacun à cet effet un bossage arrondi 4 qui sert de point de préhension, pour une pince par exemple, pour réaliser le pelage.

Plus particulièrement, comme visible sur les figures 1 et 2, chaque module ou portion de bande sécable 2A,2B,2C est adjacent selon la direction D à une fente 5 respective formée dans la bande selon une direction transversale à la direction D, chaque fente présentant une échancrure 6 (référencée uniquement dans la fente 6 adjacente au module 2B pour des raisons de clarté) à chacune de ses deux extrémités qui sert d'amorce au pelage du module ou portion sécable. Dans l'exemple de réalisation montré sur les figures 1 ou 2, on conçoit que les deux bords latéraux selon la direction D de chaque module ou portion de bande sécable de forme rectangulaire sont constitués par exemple d'un fil (film mince) de la matière de la bande qui peut facilement être déchiré par pelage mais qui est également suffisamment résistant pour que le côté du module sécable qui est commun avec un côté de l'ouverture serve de bord d'appui à la protubérance 3 quand les deux extrémités de la bande sont rapprochées l'une sur l'autre pour former une bague.

Sur les figures 1 et 2, on voit que les modules ou portions sécables de la bande 2A,2B,2C de forme rectangulaire ont des longueurs différentes selon la direction D et en particulier ont une longueur qui augmente par palier en regardant dans le sens qui va de l'ouverture 2 en direction du bord d'extrémité de la partie 1A de la bande, ce qui permet d'avoir une augmentation de diamètre de la bague qui est adaptée à un certain rythme de croissance des animaux devant être bagués.

Ces modules 2A à 2C ou portions de bande successifs selon la direction D sont donc conçus pour être détachés successivement de façon à allonger la dimension de l'ouverture 2 selon cette direction D ce qui permet à la protubérance 3 d'être rapprochée (par coulissement dans l'ouverture 2 agrandie) en direction du bord d'extrémité de la partie femelle 1A sans être sortie de l'ouverture 2. On pourrait bien entendu concevoir une forme autre que rectangulaire pour l'ouverture 2 et les modules ou portions sécables de la bande, par exemple une forme de triangle, de trapèze, de cercle ou autres formes, sans sortir du cadre de l'invention. Par ailleurs, sur les figures 1 et 2 on a représenté que trois modules sécables mais il est évident que l'on peut prévoir par exemple deux ou plus de trois modules sécables sans sortir du cadre de l'invention.

La partie d'extrémité 1A de la bande munie de l'ouverture 2 comporte en plus deux bossages sensiblement parallélélipèdiques 7 (ou encore deux rangées de bossages comme montré sur les figures 1 et 2) qui s'étendent parallèlement à la direction D de part et d'autre de l'ouverture 2 (et des modules ou portions de bande sécables 2A à 2C). Comme cela apparaît plus clairement sur la figure 2, lorsque la protubérance 3 est insérée dans l'ouverture 2 (la partie 1 A de la bande étant superposée à la partie 1B de la bande de sorte que la tête de la protubérance 3 saille du côté extérieur de la bague), les bords latéraux de la tête de la protubérance 3 sont en appui sur les bords latéraux de l'ouverture 2 et les bossages 7 (qui saillent perpendiculairement au plan de la bande 1) ferment l'espace résiduel entre les bords latéraux de la tête de la protubérance et les bords latéraux de l'ouverture. De la sorte on empêche un accès latéral à une lame dans cet espace résiduel et on renforce ainsi la protection contre un démontage frauduleux de la fixation entre les deux extrémités de la bande. Si un tel démontage frauduleux devait être tenté, on peut penser que l'introduction d'une lame dans cet espace résiduel laisserait nécessairement une trace de rayure visible sur la bande et donc détectable facilement.

Pour renforcer la solidité de la fixation entre les deux extrémités 1A et 2A, il est prévu que la partie d'extrémité 1B comporte deux rainures de guidage 8 qui s'étendent parallèlement à la direction D et dans lesquelles vient coulisser la partie d'extrémité 1A lorsqu'elle est superposée à la partie d'extrémité 1B. Le bord d'extrémité de la partie d'extrémité 1A pourra avantageusement avoir des angles arrondis pour faciliter son insertion dans les rainures de guidage 8. Comme visible sur les figures 1 et 2, chaque rainure de guidage 8 peut être constituée d'une rangée de plots en forme de L alignés selon la direction D et espacés les uns des autres selon une disposition symétrique ou non des plots d'une rainure par rapport ou plots de l'autre rainure selon l'axe longitudinal de la bande. La figure 2 montre ainsi la partie 1 A de la bande insérée dans les rainures 8 de la partie 1 B de la bande, les bossages de protection 7 venant s'interposer entre l'ouverture 2 et les rainures de guidage 8.

Le lien constitué par la bande avec le système de fixation, le système d'extension de l'ouverture 2, les bossages 7 de protection et les rainures de guidage 8 est réalisé d'une seule pièce en matière plastique ou en métal.

La partie centrale 1C de la bande entre les deux parties d'extrémité 1 A et 1 B, peut avoir une forme rectangulaire et être réalisée de manière à se trouver en surélévation par rapport à la partie 1 B ce qui fait que lorsque la bande 1 forme une bague, on obtient une sorte de calage du bord de la partie d'extrémité 1A contre un bord 9 en décrochement de la partie centrale 1C. Cette surélévation contribue également à renforcer une certaine compacité des deux parties d'extrémité de la bande lorsqu'elles sont superposées l'une sur l'autre.

Le lien selon l'invention a d'abord comme application la réalisation d'une bague d'identification pour animaux dont le diamètre peut être facilement augmenté avec un outil simple sans déposer la bague de l'animal. Dans cette application, un dispositif d'identification 10 comme une étiquette RFID peut être incorporée dans la bande et de préférence dans la partie centrale 1C de la bande. La fixation de l'étiquette RFID peut par exemple être réalisée par surmoulage si la bande 1 est en matière plastique. Une telle étiquette RFID permet d'enregistrer toutes les informations nécessaires à l'identification de l'animal telles que l'origine, la date de naissance, etc....

Bien entendu le lien selon l'invention peut être également posé autour du cou d'un animal comme un collier sans sortir du cadre de l'invention. Grâce à son système de fixation, il présente l'avantage de n'être pas facilement démontable et donc perdable. En particulier, l'insertion de la partie d'extrémité 1 A dans les rainures de la partie 1B protège la fixation 2,3 contre les risques d'arrachement par exemple lorsque l'animal se frotte à un pilier ou autre.

## Revendications

1. Lien pouvant servir de bague d'identification comprenant une bande (1) ayant deux parties d'extrémité (1A,1B) munies respectivement d'une partie femelle et d'une partie mâle d'un système de fixation, **caractérisé en ce que** la partie femelle du système de fixation est une ouverture (2) dans la bande qui est bordée par une zone (2A-2C) sécable de la bande.

2. Lien selon la revendication 1, dans lequel la zone sécable est constituée de plusieurs modules (2A,2B,2C) ou portions de bande sécables détachables individuellement de la bande.

3. Lien selon la revendication 2, dans lequel chaque module ou portion de bande sécable est conçu pour être détaché de la bande par pelage.

4. Lien selon la revendication 3, dans lequel chaque module ou portion de bande sécable comprend un bossage (4) destiné à servir de point de préhension pour une pince afin de réaliser le pelage.

5. Lien selon l'une des revendications 3 à 4, dans lequel chaque module ou portion de bande sécable est adjacent à une fente (6) dans la bande qui présente une échancrure (6) servant d'amorce pour le pelage

6. Lien selon l'une des revendications 2 à 5, dans lequel lesdits modules ou portions de bande sécables ont des dimensions différentes selon une direction longitudinale de la bande.

7. Lien selon l'une des revendications 2 à 6, dans lequel l'ouverture (2) et chaque module ou portion de bande sécable ont une forme rectangulaire.

8. Lien selon l'une des revendications précédentes, dans lequel la partie mâle du système de fixation est une protubérance (3) en forme d'ancre.

9. Lien selon la revendication 8, dans lequel la partie d'extrémité de la bande munie de la partie femelle du système de fixation comporte deux bossages (7) s'étendant parallèlement à une direction longitudinale de la bande de part et d'autre de l'ouverture (2), ces bossages servant à fermer l'espace résiduel entre la protubérance en forme d'ancre et l'ouverture quand celles-ci sont insérées l'une dans l'autre.

10. Lien selon l'une des revendications précédentes, dans lequel la partie d'extrémité (1B) de la bande munie de la partie mâle du système de fixation comporte deux rainures (8) s'étendant parallèlement à une direction longitudinale de la bande et dans lesquelles coulisse l'autre partie d'extrémité de la bande munie de la partie femelle du système de fixation.

11. Lien selon la revendication 10, dans lequel chaque rainure est constituée d'une pluralité de plots alignés selon ladite direction longitudinale et ayant une section en L.

12. Lien selon l'une des revendications précédentes, dans lequel la bande avec le système de fixation est formée d'une seule pièce en une matière plastique ou en métal.

13. Bague destinée à être posée sur un membre inférieur d'un animal, **caractérisée en ce qu'**elle est réalisée à partir d'un lien selon l'une des revendications 1 à 12.

14. Bague selon la revendication 13, dans laquelle le lien incorpore un dispositif d'identification (9).

15. Bague selon la revendication 14, dans laquelle le dispositif d'identification est une étiquette RFID.

16. Bague selon la revendication 14, dans laquelle le dispositif d'identification est disposé dans une partie centrale (1C) de la bande située entre les deux parties d'extrémité de la bande.

17. Bague selon la revendication 16, dans laquelle la partie centrale de la bande est en surélévation par rapport à la partie d'extrémité de la bande munie de la partie mâle du système de fixation.

## Claims

1. Tie that can be used as an identification ring comprising a band (1) having two end parts (1A, 1B) respectively provided with a female part and a male part of a fixing system, **characterised in that** the female part of the fixing system is an opening (2) in the band that is bordered by an easily detachable area (2A-2C) of the band.

2. Tie according to claim 1, wherein the easily detachable area consists of a plurality of easily detachable band portions or modules (2A, 2B, 2C) detachable individually from the band.

3. Tie according to claim 2, wherein each easily detachable band portion or module is designed to be detached from the band by peeling it off.

4. Tie according to claim 3, wherein each easily detachable band portion or module comprises a boss (4) intended to be held with a gripping tool in order to peel it off.

5. Tie according to either of claims 3 or 4, wherein each easily detachable band portion or module is adjacent a slot (6) in the band that includes a notch (6) for starting to peel it off.

6. Tie according to any of claims 2 to 5, wherein said easily detachable band portions or modules have different dimensions in a longitudinal direction of the band.

7. Tie according to any of claims 2 to 6, wherein the opening (2) and each easily detachable band portion or module have a rectangular shape.

8. Tie according to any of the preceding claims, wherein the male part of the fixing system is an anchor-shaped protuberance (3).

9. Tie according to claim 8, wherein the end part of the band provided with the female part of the fixing system includes two bosses (7) extending parallel to a longitudinal direction of the band on either side of the opening (2), these bosses closing the residual gap between the anchor-shaped protuberance and the opening when the latter are inserted one within the other.

10. Tie according to any of the preceding claims, wherein the end part (1B) of the band provided with the male part of the fixing system includes two grooves (8) extending parallel to a longitudinal direction of the band and in which the other end part of the band provided with the female part of the fixing system slides.

11. Tie according to claim 10, wherein each groove consists of a plurality of studs aligned in said longitudinal direction and having an L-shaped section.

12. Tie according to any of the preceding claims, wherein the band is formed in one piece with the fixing system in a plastic material or metal.

13. Ring adapted to be placed on a lower limb of an animal, **characterised in that** it is produced from a tie according to any of claims 1 to 12.

14. Ring according to claim 13, wherein the tie incorporates an identification device (9).

15. Ring according to claim 14, wherein the identification device is an RFID tag.

16. Ring according to claim 14, wherein the identification device is disposed in a central part (1C) of the band situated between the two end parts of the band.

17. Ring according to claim 16, wherein the central part of the band is raised relative to the end part of the band provided with the male part of the fixing system.

## Patentansprüche

1. Verbindungsteil, das als Identifikationsring dienen kann, mit einem Band (1), das zwei Endabschnitte (1A, 1 B) aufweist, die jeweils über ein Aufnahmeteil und über ein Einsteckteil eines Befestigungssystems verfügen, **dadurch gekennzeichnet, dass** das Aufnahmeteil des Befestigüngssystems eine Öffnung (2) in dem Band ist, die durch einen abtrennbaren Bereich (2A-2C) des Bands eingefasst ist.

2. Verbindungsteil nach Anspruch 1, bei dem der abtrennbare Bereich aus mehreren abtrennbaren Modulen (2A, 2B, 2C) oder aus abtrennbaren Bereichen des Bands besteht, die einzeln von dem Band lösbar sind.

3. Verbindungsteil nach Anspruch 2, bei dem jedes abtrennbare Modul oder jeder abtrennbare Bereich des Bands dazu eingerichtet ist, durch abscherendes Einreißen von dem Band gelöst zu werden.

4. Verbindungsteil nach Anspruch 3, bei dem jedes abtrennbare Modul oder jeder abtrennbare Bereich des Bands eine Erhebung (4) aufweist, die dazu eingerichtet ist, als Angriffspunkt für eine Zange zu dienen, um das abscherende Einreißen zu bewirken.

5. Verbindungsteil nach einem der Ansprüche 3 bis 4, bei dem jedes abtrennbare Modul oder jeder abtrennbare Bereich des Bands neben einem Spalt (6) in dem Band angeordnet ist, der einen Einschnitt (6) bildet, der als Angriffspunkt für das abscherende Einreißen dient.

6. Verbindungsteil nach einem der Ansprüche 2 bis 5, bei dem die abtrennbaren Module oder Bereiche des Bands verschiedene Größen entlang einer Längsrichtung des Bands aufweisen.

7. Verbindungsteil nach einem der Ansprüche 2 bis 6, bei dem die Öffnung (2) und jedes abtrennbare Modul oder jeder abtrennbare Bereich des Bands eine rechteckige Form aufweisen.

8. Verbindungsteil nach einem der vorangehenden Ansprüche, bei dem das Einsteckteil des Befestigungssystems ein ankerförmiger Vorsprung (3) ist.

9. Verbindungsteil nach Anspruch 8, bei dem der mit dem Aufnahmeteil des Befestigungssystems versehene Endabschnitt des Bands zwei Erhebungen (7) aufweist, die sich parallel zu einer Längsrichtung des Band beiderseits der Öffnung (2) erstrecken, wobei die Erhebungen dazu eingerichtet sind, den verbleibenden Zwischenraum zwischen dem ankerförmigen Vorsprung und der Öffnung zu schließen, wenn diese ineinander eingefügt sind.

10. Verbindungsteil nach einem der vorangehenden Ansprüche, bei dem der mit dem Einsteckteil des Befestigungssystems versehene Endabschnitt (1B) des Bands zwei Nuten (8) aufweist, die sich parallel zu einer Längsrichtung des Bands erstrecken und in die der mit dem Aufnahmeteil des Befestigungssystems versehene Endabschnitt des Bands gleitet.

11. Verbindungsteil nach Anspruch 10, bei dem jede Nut aus einer Anzahl von Kontaktzungen besteht, die entlang der Längsrichtung aufgereiht sind und einen L-förmigen Querschnitt aufweisen.

12. Verbindungsteil nach einem der vorangehenden Ansprüche, bei dem das Band mit dem Befestigungssystem einstückig aus einem Kunststoffmaterial oder aus Metall gebildet ist.

13. Ring, der dazu eingerichtet ist, an einem unteren Körperteil eines Tieres angebracht zu werden, **dadurch gekennzeichnet, dass** er aus einem Verbindungsteil nach einem der Ansprüche 1 bis 12 gebildet wird.

14. Ring nach Anspruch 13, bei dem eine Identifikationsvorrichtung (9) in das Verbindungsteil eingebracht ist.

15. Ring nach Anspruch 14, bei dem die Identifikationsvorrichtung ein RFID-Etikett ist.

16. Ring nach Anspruch 14, bei dem die Identifikationsvorrichtung in einem mittigen Abschnitt (1C) des Bands angeordnet ist, der zwischen den beiden Endabschnitten des Bands eingerichtet ist.

17. Ring nach Anspruch 16, bei dem der mittige Abschnitt des Bands in Bezug auf den mit dem Einsteckteil des Befestigungssystems versehenen Endabschnitt höher liegt.
